# EUROPEAN PATENT APPLICATION

(11) **EP 4 840 654 A1**
(43) Date of publication of application: **18.11.2026**
(21) Application number: 26177534.0
(22) Date of filing: 08.05.2026
(51) Int. Cl.: B60G 3/20, B60G 7/00, B60G 7/02

(54) **ROAD VEHICLE WITH ACTIVE SUSPENSION FOR CAMBER AND CASTER ANGLE CONTROL**

(30) Priority: 14.05.2025 IT 202500010838
(71) Applicant: FERRARI S.p.A., 41100 Modena (IT)
(72) Inventor: BODINI, Alberto, 41100 MODENA (IT); RAMIREZ RUIZ, Isabel, 41100 MODENA (IT)
(74) Representative: Studio Torta S.p.A.

(57) **Abstract**

A road vehicle with a roll axis X, pitch axis Y and yaw axis Z; wherein the vehicle comprises a chassis, front wheels and rear wheels; for each wheel there being provided a suspension connecting the corresponding wheel to the chassis; wherein at least each suspension of the front wheels comprises an upper triangle and a lower triangle with corresponding vertices connected to the corresponding wheel on opposite sides along the direction Z with respect to the centre of the wheel and opposite base ends connected to the chassis in a rotating manner along the direction X to allow the wheel to be lifted along the direction Z with respect to the chassis; wherein the upper triangle comprises a first rod and a second rod with first ends connected in the vertex and second ends opposite to vertex, which are connected to the chassis; wherein at least one of the second ends of the rods of the upper triangle is connected to the chassis in a movable manner along the direction X.

## Description

### Cross-Reference To Related Applications

This patent application claims priority from Italian patent application no. 102025000010838 filed on May 14, 2025, the entire disclosure of which is incorporated herein by reference.

### Technical Field Of The Invention

The technical field of reference of the invention is that relating to road vehicles, in particular sports road vehicles. In detail, the invention relates to a road vehicle with active suspensions configured to control the camber and caster angle. In this context, the invention deals with the problem of how to offer a new way to control camber and caster angles with advantages in terms of transverse dimensions and reduction of unsprung mass.

### State Of The Art

As indicated in the preceding paragraph, the technical field of reference of the invention is that relating to road vehicles, in particular sports road vehicles. As it is known, a road vehicle is a vehicle in which geometry and dynamics are defined by three axes known as roll axis X, pitch axis Y and yaw axis Z. From a structural point of view, the vehicle comprises two front wheels and two rear wheels, a chassis and, for each wheel, a suspension, which connects the corresponding wheel to the chassis. The invention relates to a type of suspension in which each suspension (or at least those of the front wheels) comprises an upper triangle and a lower triangle with corresponding vertices connected to the fixed part of the wheel (for example, to the hub carrier). The triangles are connected with two vertices to the chassis and with a vertex to the hub carrier. In particular, the connection of the triangles to the chassis is obtained so as to be rotatable along the direction X (for example, by providing hinges with an axis parallel to the axis X) in order to allow the suspension to bump. The connections of the vertices of the triangles to the fixed part of the wheel are obtained in a ball-shaped manner to allow for the steering and the variation of the camber angle of the wheel. Other construction details are omitted because the architecture of the aforementioned suspensions is well known to a person skilled in the art. In the field of sports road vehicles, it is known to provide active suspensions, namely suspensions that, in addition to the triangles described above (and to the steering lever, which was not mentioned above but is still present), also have active elements or actuators capable of imposing particular configurations on the wheel in terms of arrangement in space. For example, actuators capable of controlling the camber angle of the wheel can be provided. Currently known actuators used for this purpose are of the type featuring a telescopic bridge between the wheel and the chassis and comprise a first end coupled to the chassis and a second end coupled to the fixed part of the wheel.

Starting from this known structure, the object of the invention is to offer a new way to actively control the camber and caster angles without bridge actuators between wheel and chassis in order to optimise the transverse dimensions and reduce the unsprung mass.

### Subject-Matter And Summary Of The Invention

According to the invention, there is provided a road vehicle as defined in the appended claims.

In particular, the starting point of the invention is a road vehicle with a roll axis X, a pitch axis Y and a yaw axis Z. Hereinafter, when the axes X, Y and Z are mentioned, both the axes themselves and axes parallel to them shall be understood. For example, the indication "along the axis X" also means along an axis parallel to the axis X. The vehicle comprises a chassis representing the sprung mass, as well as front and rear wheels representing the unsprung mass. For each wheel there is a suspension, which connects the corresponding wheel to the chassis. The suspension obviously allows the wheel to rotate along its central axis and to perform possible vertical deflections as well as the steering.

The suspension of the invention is of a particular type and comprises an upper triangle and/or a lower triangle. Each triangle has a vertex connected to the corresponding wheel (namely, to the fixed part of the wheel, such as the hub carrier). The connection of the vertices of the triangles to the wheel is achieved by means of ball joints, whereas the connection of the bases to the chassis is achieved by means of coaxial fixing. By so doing, the wheel is allowed to make vertical movements along Z and to steer. Steering takes place through a special steering arm connected on one side to the hub carrier and on the other side to the steering system of the vehicle supported by the chassis. All of the above is known, as it is also known that the upper triangle is of the type comprising a first rod and a second rod with first ends converging in the vertex and second ends opposite the vertex connected to the chassis.

In this configuration, according to the main aspect of the invention, at least one of the second ends of the rods of the upper triangle is connected to the chassis in a movable manner along the direction X. In this way, starting from a position in which the wheel has an initial camber angle, as the position of the end along X changes, a motion along X and/or Y is imposed on the vertex of the upper triangle, resulting in a consequent variation of the camber and caster angles of the wheel. The same concept can also be applied to the lower triangle.

By so doing, it is possible to control the camber, caster and kingpin angles without providing additional bridge elements between the chassis and the wheel, thereby reducing overall dimensions along Y and the unsprung mass. It should be pointed out that is also leads to the possibility of controlling the corresponding scrub radius and caster trail.

According to an embodiment of the invention, both the second ends of the rods of the upper triangle can be movable along the direction joining the two ends. In this case, preferably, the second ends of the rods of the upper triangle are movable along the direction joining the two ends or are movable along the direction joining the two ends independently by means of a corresponding actuator attached to the chassis.

### Brief Description Of The Drawings

The invention will be best understood upon perusal of the following detailed description of some embodiments thereof, by mere way of non-limiting example, with reference to the accompanying drawings, in which:
- figure 1 is a schematic view of a road vehicle that can be improved thanks to the invention;
- figures 2 and 3 are schematic views of a suspension of the vehicle of figure 1;
- figures 4-10 are schematic views of a suspension according to the invention.

### Preferred Embodiments Of The Invention

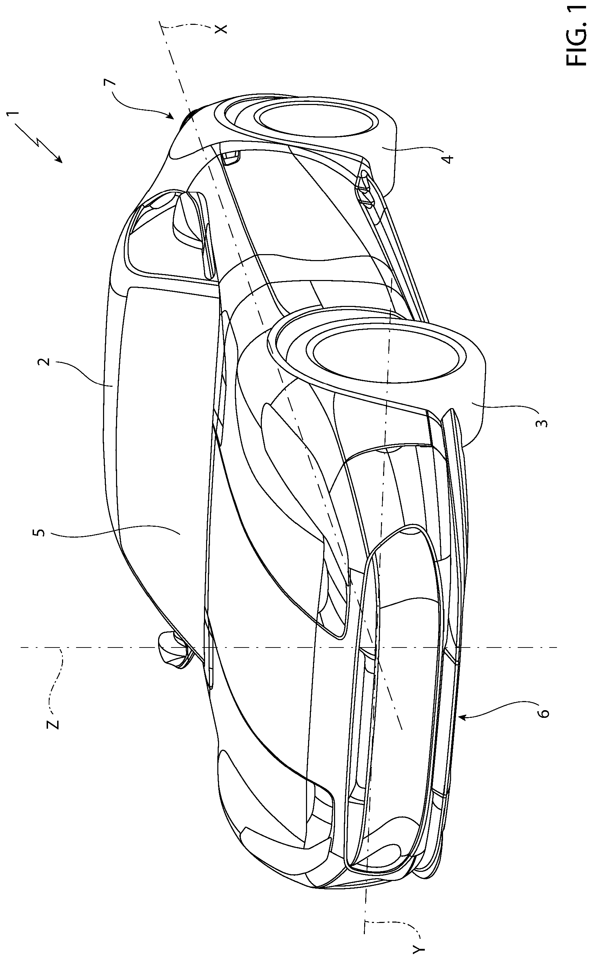

Figure 1 is a schematic view of a road vehicle that can be improved thanks to the invention. In particular, figure 1 shows a road vehicle 1 with a roll axis X, a pitch axis Y and a yaw axis Z comprising a chassis 2, which, along the direction X, identifies a front 6, a passenger compartment 5 and a rear 7. The vehicle 1 comprises front wheels 3 and rear wheels 4. As it is known, the wheels are connected to the chassis by suspensions.

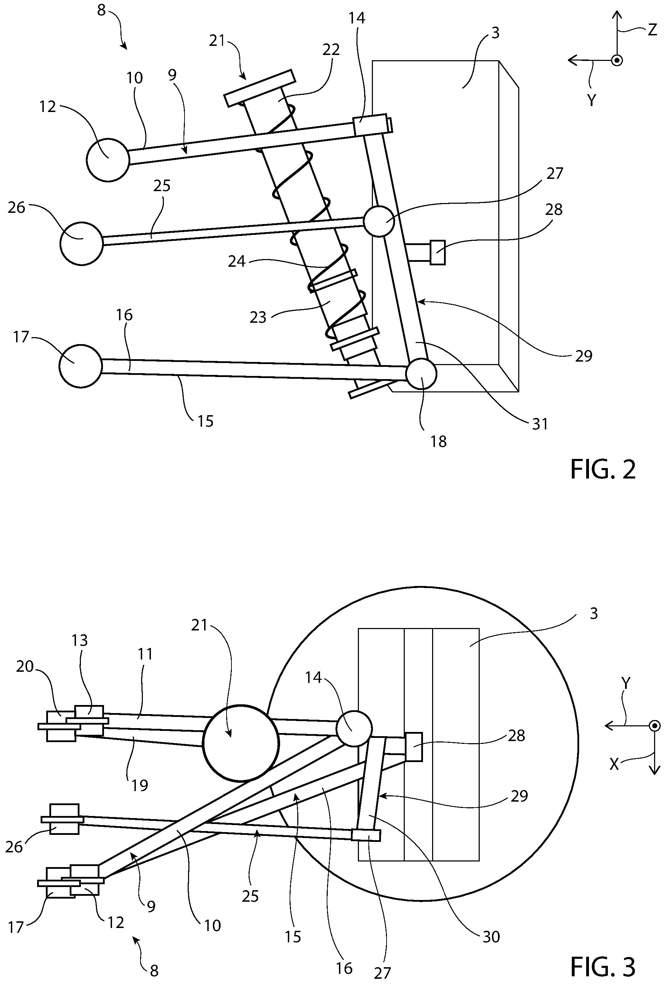

Figures 2 and 3 are schematic views of a suspension of the vehicle of figure 1, for example the suspension of a front wheel 3. Figure 2 is a schematic view along the direction X, whereas figure 3 is a schematic view along the direction Z. As visible in these figures, the suspension 8 shown therein comprises an upper triangle 9 and a lower triangle 15 with corresponding vertices 14, 18 connected to the fixed portion 29 of the corresponding wheel 3 on opposite sides along the direction Z with respect to the centre 28 of the wheel 3. Said fixed portion 29 is schematically shown with a substantially vertical rod 31 and represents the hub carrier of the wheel 3. These figures also show a steering lever 25 with an inner end 26 connected to the steering unit supported by the chassis 2 and an outer end 27 connected to an arm 30 of the fixed structure 29 of the wheel 3. These figures further show a shock absorber 21 with a body 22, a shaft 23 and a coil spring 24. Each triangle of this example comprises two rods (references 10 and 11 for the upper triangle and references 16, 19 for the lower triangle), in which the base ends 12, 13, 17, 20 opposite the vertices 14 18 are connected to the chassis 2 in a rotating manner around an axis going through the ends 12-13 and 17-20 to allow the wheel 3 to be lifted along the direction Z with respect to the chassis 2. This connection, which can rotate around the axis of the base ends 12, 13, 17, 20, is schematically represented by the presence of hinges with a rotation axis that is parallel to the direction going through the ends 12-13 and 17-20 (in this example, substantially parallel to the direction X). In the position shown (which will be defined as neutral or start position), the second rod 11 of the triangle 9 substantially lies along the axis Y and the first rod 10 has a second end 12 in a forward position along X with respect to the other end 13. The vertex (14) is aligned with the centre of the wheel 3 along Z and the second ends 12, 13 of the rods 10, 11 of the upper triangle 9 are aligned along X.

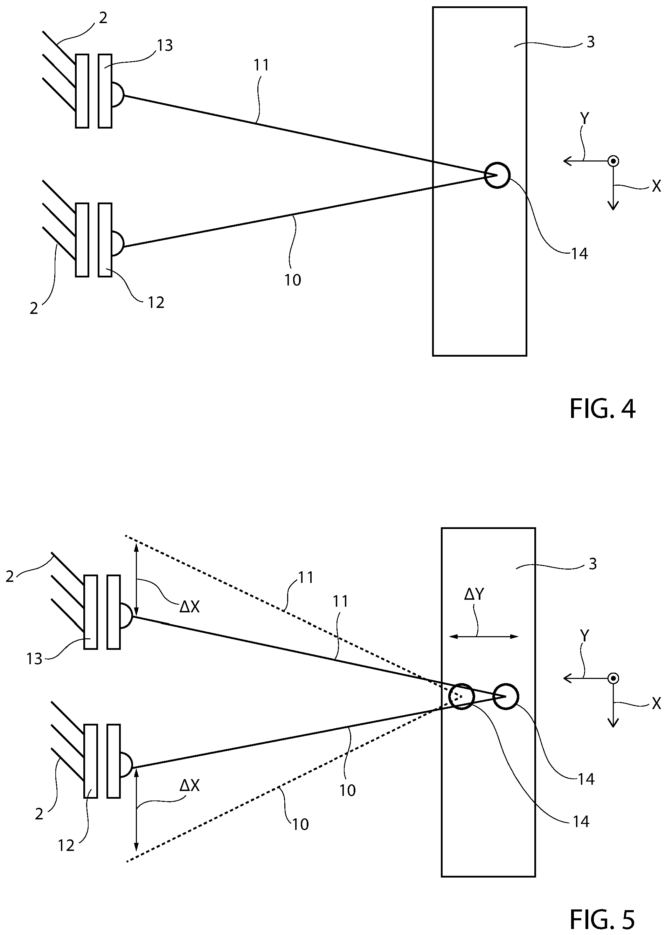

Of all the elements shown in these figures 2 and 3, the most relevant element (because its modified by the invention) is the upper triangle 9 as shown in figure 4, namely comprising the rods 10 and 11 with the base ends 12 and 13 in the form of hinges that can rotate around the axis going through 12-13 and the vertex 14 that is connected to the wheel 3 with a ball joint 14 in a higher position along Z compared to the centre 28 of the wheel 3. The remaining elements can also take different forms (as long as they fulfil the normal tasks of the suspension) and are shown only by way of example.

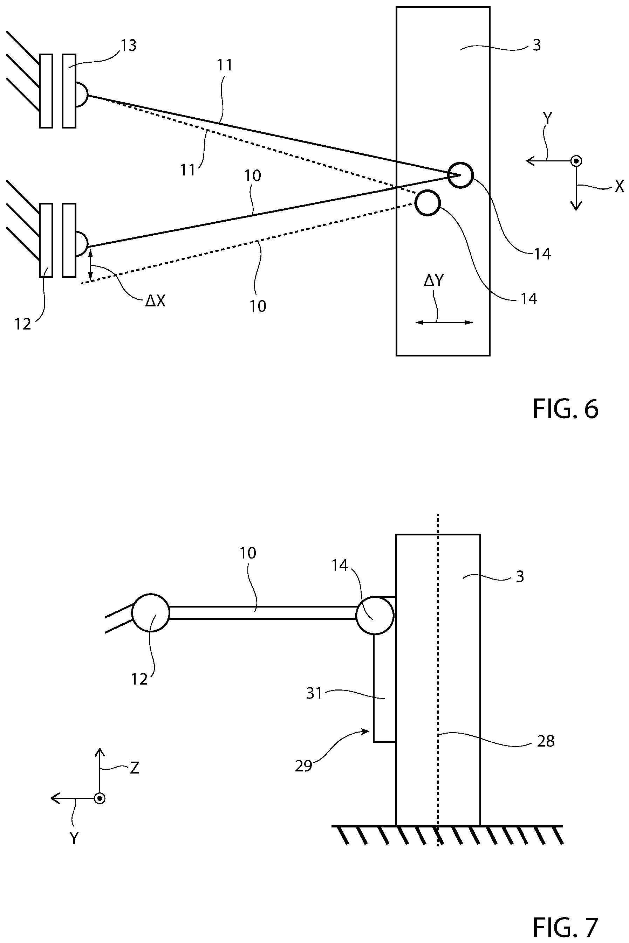

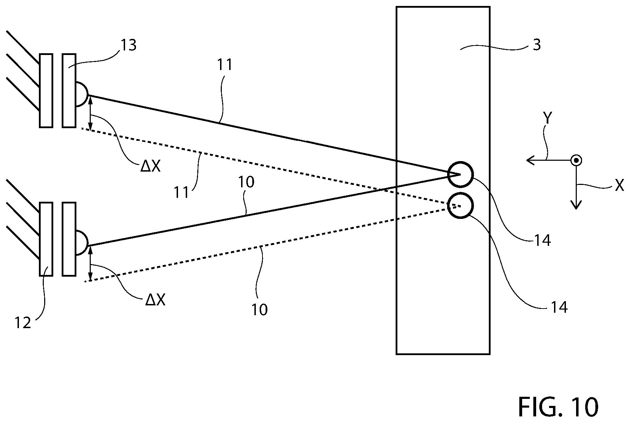

Figures 4-6 and 10 are schematic views along Z of the triangle 9, showing the new functionality introduced by the invention. In an inventive manner, at least one of the second ends 12, 13 of the rods 10, 11 of the upper triangle 9 is connected to the chassis 2 in a movable manner along the direction X so that, starting from a neutral position of the preceding figures, in which - for example - the wheel 3 has an initial camber angle, as the position of the end/s 12, 13 along X changes, a motion along Y and/or along X is imposed on the vertex 14, resulting in a generation of a variation of camber and/or caster angle change of the wheel (3). Figure 5 shows a first configuration, in which both second ends 12, 13 of the rods 10, 11 of the upper triangle 9 are movable along the direction X and have been moved away from each other along X in a coordinated manner (for example, by a single actuator attached to the chassis 2). In this case, the vertex 14 only undergoes a displacement along Y (no displacement along X). Figure 6 shows a configuration in which the second ends 12, 13 of the rods 10, 11 of the upper triangle 9 are movable along the direction X independently (for example, by providing a corresponding actuator attached to the chassis for each hinge) and in which the sole end 12 has moved away from the end 13 along X (or they both move along X to different extents). In this case, the vertex 14 undergoes a displacement along Y and also a displacement along X. Figure 10 shows a configuration in which the second ends 12, 13 of the rods 10, 11 of the upper triangle 9 are movable along the direction X in a coordinated manner and in which both ends 12 13 undergo a displacement along X with the same intensity and in the same sense. In this case, the vertex 14 only undergoes a displacement along X (no displacement along Y). In this case, a non-zero caster angle is generated on wheel 3 (camber angle not changed).

Figures 7-8 are schematic views along X, which shown the neutral start position configuration and the configuration of the wheel 3 reached with the suspension as in figure 5, respectively. The movement of the vertex 14 towards the chassis 2 along Y has generated a non-zero camber angle on the wheel 3 (caster angle not changed).

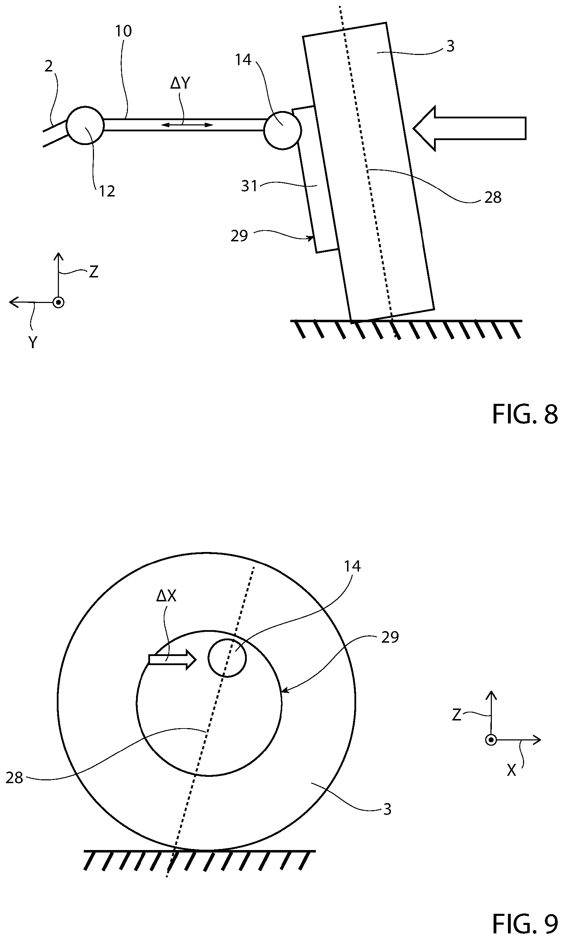

Figure 9 is a schematic view along Y, which shows the configuration of the wheel 3 reached with the suspension as in figure 6. It is evident that the vertex 14 has also undergone a displacement along X, thereby resulting in a variation not only of the camber angle but also of the caster angle of the wheel 3. Finally, it is clear that the vehicle disclosed and shown herein can be subjected to changes and variations, without for this reason going beyond the scope of protection of the invention defined in the appended claims.

## Claims

1. Road vehicle (1) with a roll axis (X), pitch axis (Y) and yaw axis (Z); wherein the vehicle (1) comprises a chassis (2), front wheels (3) and rear wheels (4); for each wheel being provided a suspension (8) connecting the corresponding wheel (3) to the chassis (2);
wherein at least each front wheel suspension (3) comprises an upper triangle (9) and a lower triangle (15) with corresponding vertices (14, 18) connected to the corresponding wheel (3) from opposite sides along the direction (Z) relative to the center of the wheel (3) and opposite base ends (12, 13, 17, 20) connected to the chassis in a rotating manner along the direction (X) to allow the wheel (3) to be lifted along the direction (Z) relative to the chassis (2);
wherein the upper triangle (9) comprises a first rod (10) and a second rod (11) with first ends connected in the vertex (14) and second ends (12, 13) opposite the vertex (14) connected to the chassis (2);
**characterized in that** at least one of the second ends (12, 13) of the rods (10, 11) of the upper triangle (9) is connected to the chassis (2) in a movable manner along the direction (X) such that, starting from a neutral position wherein the wheel (3) has initial or zero camber and/or caster angle, as the position along (X) of one or both of the ends (12, 13) changes, a motion along (Y) and/or along (X) of the vertex (14) is imposed, resulting in a generation or variation of camber and/or caster angle change of the wheel (3).

2. Vehicle according to claim 1, wherein both second ends (12, 13) of the rods (10, 11) of the upper triangle (9) are movable along the direction (X).

3. Vehicle according to claim 2, wherein the second ends (12, 13) of the rods (10, 11) of the upper triangle (9) are movable along the direction (X) in a coordinated manner by a single actuator attached to the chassis (2); the second ends (12, 13) being movable in the same sense or in opposite senses.

4. Vehicle according to claim 2, wherein the second ends (12, 13) of the rods (10, 11) of the upper triangle (9) are movable along the direction (X) independently by means of a corresponding actuator attached to the chassis (2).

5. Vehicle according to any of the preceding claims, wherein the first ends of the rods (10, 11) of the upper triangle (9) are connected in the vertex (14) by a ball joint.

6. Vehicle according to any of the previous claims, wherein the upper triangle (9) is substantially within a plane parallel to the plane formed by the roll and yaw axes (X, Y).

7. Vehicle according to claim 6, wherein in the neutral position the second rod (11) is basically along the axis (Y) and the first rod (10) presents second end (12) in the forward position along (X).

8. Vehicle according to any of the previous claims, wherein in the neutral position the vertex (14) is aligned along (Z) with the center of the wheel (3).

9. Vehicle according to any of the previous claims, wherein the second ends (12, 13) of the rods (10, 11) of the upper triangle (9) are aligned along (X).
